(19) Europäisches Patentamt / European Patent Office / Office européen des brevets

(11) **EP 4 235 118 B1**

(12) # EUROPÄISCHE PATENTSCHRIFT

(45) Veröffentlichungstag und Bekanntmachung des Hinweises auf die Patenterteilung:
**13.11.2024   Patentblatt 2024/46**

(21) Anmeldenummer: **23157467.4**

(22) Anmeldetag: **20.02.2023**

(51) Internationale Patentklassifikation (IPC):
**G01F 25/10** $^{(2022.01)}$     **G05D 11/13** $^{(2006.01)}$

(52) Gemeinsame Patentklassifikation (CPC):
**G05D 11/132**

(54) **VERFAHREN ZUM HERSTELLEN EINES GASGEMISCHES UND GASGEMISCH-HERSTELLANLAGE**

METHOD FOR PRODUCING A GAS MIXTURE AND GAS MIXTURE PRODUCTION INSTALLATION

PROCÉDÉ DE PRODUCTION D'UN MÉLANGE GAZEUX ET INSTALLATION DE PRODUCTION D'UN MÉLANGE GAZEUX

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **28.02.2022   DE 102022104748**

(43) Veröffentlichungstag der Anmeldung:
**30.08.2023   Patentblatt 2023/35**

(73) Patentinhaber: **Physikalisch-Technische Bundesanstalt Braunschweig und Berlin 38116 Braunschweig (DE)**

(72) Erfinder:
• **Kramer, Rainer**
  **38112 Braunschweig (DE)**
• **Sarge, Stefan**
  **38116 Braunschweig (DE)**

(74) Vertreter: **Gramm, Lins & Partner Patent- und Rechtsanwälte PartGmbB Frankfurter Straße 3 C 38122 Braunschweig (DE)**

(56) Entgegenhaltungen:
DE-B3- 102008 031 005     US-A- 4 706 492
US-A1- 2021 394 140     US-B2- 8 418 732

**Beschreibung**

Die Erfindung betrifft ein Verfahren zum Herstellen eines Gasgemisches mit den Schritten (a) Leiten eines ersten Gasstroms eines ersten Gases aus einer ersten Gasquelle in eine erste kritische Düse, die bei einem ersten kritischen Erstdüseneingangsdruck kritisch wird, mit einem Erstdüseneingangsdruck, der oberhalb des kritischen Erstdüseneingangsdrucks liegt, (b) Leiten des ersten Gasstroms und des zweiten Gasstroms eines zweiten Gases aus einer zweiten Gasquelle in eine zweite kritische Düse, die (i) bei einem zweiten kritischen Zweitdüseneingangsdrucks kritisch wird, (ii) in einer ersten Gasströmungsrichtung des ersten Gases hinter der ersten kritischen Düse angeordnet ist und (iii) in einer zweiten Gasströmungsrichtung des zweiten Gases hinter der zweiten Gasquelle angeordnet ist, mit einem Zweitdüseneingangsdruck, der oberhalb des kritischen Zweitdüseneingangsdrucks liegt, sodass sich ein Mischgasstrom ergibt, (c) Messen des Erstdüseneingangsdrucks und (d) Messen des Zweitdüseneingangsdrucks.

Gemäß einem zweiten Aspekt betrifft die Erfindung eine Gasgemisch-Herstellanlage zum Herstellen eines Gasgemisches, mit (a) einer ersten Gasquelle zum Abgeben eines ersten Gases, (b) einer ersten kritischen Düse, die (i) bei einem ersten kritischen Erstdüseneingangsdrucks kritisch wird und (ii) mit der ersten Gasquelle verbunden ist, (c) einer zweiten Gasquelle zum Abgeben eines zweiten Gases, (d) einer zweiten kritischen Düse, die (i) bei einem zweiten kritischen Zweitdüseneingangsdrucks kritisch wird, (ii) in einer ersten Gasströmungsrichtung des ersten Gases hinter der ersten kritischen Düse angeordnet ist und (iii) in einer zweiten Gasströmungsrichtung des zweiten Gases hinter der zweiten Gasquelle angeordnet ist, (e) einem ersten Druckmesser, der zum Messen eines Erstdüseneingangsdrucks an einem ersten Eingang der ersten kritischen Düse angeordnet ist, (f) einem zweiten Druckmesser, der zum Messen eines Zweitdüseneingangsdrucks an einem zweiten Eingang der zweiten kritischen Düse angeordnet ist, und (g) einer Auswerteeinheit.

Gasgemische werden beispielsweise zum Kalibrieren von Sensoren eingesetzt, die Gasbestandteile messen sollen. Solche Gasgemische werden auch als Prüfgasgemische bezeichnet. Es ist bekannt, Prüfgasgemische durch gravimetrische Einwägung in Prüfgasflaschen herzustellen. Alternativ werden Prüfgasgemische durch Befüllen der Prüfgasflaschen mit den Gasbestandteilen hergestellt, wobei der Druckanstieg beim Befüllen erfasst und daraus die Gasbestandteile berechnet werden. Die Qualität eines Prüfgasgemisches hängt von der Unsicherheit ab, mit der die Konzentration der einzelnen Gase bekannt ist. Nachteilig an solchen Gasgemischen ist, dass eine Gasflasche stets nur genau ein Prüfgasgemisch enthält.

Aus der US2021394140A1 ist eine Gasmischvorrichtung zur Kalibrierung eines Gasanalysators bekannt, die zwei Gaseinlassleitungen für jeweils ein Gas, einen Mischkanal mit Einlassöffnungen und mindestens zwei Ventile umfasst, wobei ein Strömungsquerschnitt des Mischkanals an der ersten stromaufwärts gelegenen Einlassöffnung kleiner als an der zweiten stromabwärts gelegenen Einlassöffnung ist.

Die US4706492 offenbart ein Verfahren und eine Vorrichtung zur Bestimmung des Gasdurchsatzes in einer Hochdruckdüse mit kritischer Strömung, wobei ein unter hohem Druck stehendes Gas durch zwei kritische Strömungsdüsen strömt und ein Korrekturfaktor für die zweite kritische Düse berechnet wird.

Aus der US8418732 ist ein Druckgasabgabesystem und Verfahren zu dessen Verwendung bekannt, bei dem komprimierte Gase aus Druckgasspeichern entnommen werden, durch druckgeregelte Durchflussregelventile und kritische Durchfluss-Venturi-Ventile geleitet werden, um die Massendurchflussraten der komprimierten Gase vor der Abgabe des Gemischs zu steuern.

Um Prüfgasgemische mit sich zeitlich ändernden Konzentrationen der Gase zu erzeugen, werden Durchflussmesser für jede Komponente verwendet. Aus der DE102008031005 B3 ist bekannt, zwei kritische Düsen zu verwenden, um einen Mischgasstrom herzustellen. Nachteilig an der dort beschriebenen Lösung ist, dass die Düsencharakteristika bekannt sein müssen.

Der Erfindung liegt die Aufgabe zugrunde, dass Herstellen eines Gasgemisches zu vereinfachen.

Die Erfindung löst das Problem durch ein gattungsgemäßes Verfahren, das den Schritt eines Bestimmens eines Mischungsverhältnisses von zweitem Gas zu erstem Gas im Mischgasstrom aus dem Erstdüseneingangsdruck und dem Zweitdüseneingangsdruck beinhaltet, wobei das Bestimmen des Mischungsverhältnisses ohne Verwendung eines Durchflusswerts erfolgt.

Gemäß einem zweiten Aspekt löst die Erfindung das Problem durch eine gattungsgemäße Gasgemisch-Herstellanlage, bei der die Auswerteeinheit ausgebildet ist zum automatischen Bestimmen eines Mischungsverhältnisses von erstem Gas zu zweitem Gas ohne Verwendung eines Durchflusswerts nur anhand des Erstdüseneingangsdrucks und des Zweitdüseneingangsdrucks.

Vorteilhaft an der Erfindung ist, dass das Mischungsverhältnis mit besonders geringem Aufwand bestimmt werden kann. Insbesondere ist in der Regel das Ermitteln der Düsendurchflüsse entbehrlich.

Günstig ist zudem, dass eine erfindungsgemäße Gasgemisch-Herstellanlage vergleichsweise einfach aufgebaut sein kann, weil das Ermitteln des Mischungsverhältnisses ausschließlich die Kenntnis des Erstdüseneingangsdrucks und des Zweitdüseneingangsdrucks erfordert.

Im Rahmen der vorliegenden Beschreibung wird unter dem Merkmal, dass der erste Gasstrom in die erste kritische Düse geleitet wird, insbesondere verstanden, dass nur der erste Gasstrom der ersten kritischen Düse zugeführt wird. Unter dem Merkmal, dass der erste Gasstrom und der zweite Gasstrom in die zweite kritische Düse geleitet werden, wird insbesondere verstanden, dass nur der erste und der zweite Gasstrom durch diese kritische Düse fließen.

Der jeweilige Düseneingangsdruck ist insbesondere derjenige Druck, der unmittelbar vor der entsprechenden kritischen Düse herrscht.

Bei den Düsen handelt es sich beispielsweise um Venturi-Düsen. Unter einer kritischen Düse wird eine Düse verstanden, die in einen kritischen Zustand bringbar ist. Im kritischen Zustand hängt der Durchfluss durch die kritische Düse nicht vom Ausgangsdruck, also dem Druck auf der stromabwärtigen Seite der kritischen Düse, ab. Insbesondere hängt der Durchfluss der kritischen Düse im kritischen Zustand nur vom Eingangsdruck, der Eingangstemperatur des Gases und der Gaszusammensetzung ab, sofern der Ausgangsdruck hinreichend klein ist.

Das Verhältnis von Düseneingangsdruck zu Düsenausgangsdruck wird kritisches Druckverhältnis genannt.

Unter dem Merkmal, dass das Bestimmen des Mischungsverhältnisses nur anhand des Erstdüseneingangsdrucks und des Zweitdüseneingangsdrucks erfolgt, wird insbesondere verstanden, dass zur Berechnung des Mischungsbehältnisses eine Formel verwendet wird, die keinen Zusammenhang mit einem geometrischen Parameter der Düse enthält. Insbesondere enthält die Formel keinen Düsenbeiwert und/oder keine Düsenquerschnittsfläche. In anderen Worten ist die Kenntnis dieser Parameter entbehrlich.

Unter dem Mischungsverhältnis wird insbesondere ein Zahlenwert verstanden, der den Anteil des ersten Gases und/oder des zweiten Gases am Mischgasstrom angibt. Der Anteil kann beispielsweise ein Gewichtsanteil, ein Stoffmengenanteil oder ein Volumenanteil sein.

Unter einem Durchflusswert wird insbesondere ein Parameter verstanden, der den Durchfluss kodiert. Der Durchfluss kann ein Volumen pro Zeiteinheit, Masse pro Zeiteinheit, Gewicht pro Zeiteinheit oder Stoffmenge pro Zeiteinheit sein.

Unter dem Merkmal, dass das Bestimmen des Mischungsverhältnisses von zweitem Gas zu erstem Gas im Mischgasstrom ohne Verwendung eines Durchflusswerts erfolgt, wird insbesondere verstanden, dass das Mischungsverhältnis nur anhand des Erstdüseneingangsdrucks und des Zweitdüseneingangsdrucks sowie gegebenenfalls von Konzentrationen von Gasanteilen im ersten Gas und/oder im zweiten Gas sowie gegebenenfalls der Temperaturen der Gase erfolgt.

Bei der Gasquelle handelt es sich vorzugsweise um einen Vorratsbehälter, insbesondere eine Gasflasche.

Bei dem ersten Gas und/oder dem zweiten Gas handelt es sich um einen Reinstoff oder ein Gasgemisch. Beispielsweise kann das erste Gas oder das zweite Gas Luft sein, insbesondere synthetische Luft. Wenn das erste Gas ein Gasgemisch ist, so enthält es vorzugsweise höchstens 4, insbesondere höchstens drei, verschiedene Reingase. Wenn das zweite Gas ein Gasgemisch ist, so enthält es vorzugsweise höchstens 4, insbesondere höchstens drei, verschiedene Reingase. Das erste Gas unterscheidet sich in seiner Zusammensetzung vom zweiten Gas.

Vorzugsweise ist die Konzentration des zumindest einen Gas-Bestandteils des Gases mit einer relativen Messunsicherheit von höchstens 1 Prozent bekannt.

Gemäß einer bevorzugten Ausführungsform erfolgt das Bestimmen des Mischungsverhältnisses ohne Verwendung eines Düsenparameters. Insbesondere erfolgt das Bestimmen des Mischungsverhältnisses anhand der Formel

$$x = \frac{p_2 - p_1/(p_1'/p_2')}{p_2}$$

, in der $p_1$ der Erstdüseneingangsdruck, $p_2$ der Zweitdüseneingangsdruck, $p'_1$ der Erstdüsenein- gangsdruck bei Zuleiten des ersten Gases und ohne Zuleiten des zweiten Gases und $p'_2$ der Zweitdüseneingangsdruck bei Zuleiten des ersten Gases und ohne Zuleiten des zweiten Gases ist. Diese Formel ist insbesondere dann eine gute Näherung, wenn die Gaskonstante für das erste Gas und die Gaskonstante für das zweite Gas sich nur wenig unterscheiden, beispielsweise um höchstens 2%, insbesondere höchstens 1%.

Vorzugsweise sind die erste Düse und die zweite Düse so gewählt, dass beide Düsen kritisch sind, wenn ein Erstgasvolumenstrom des ersten Gases zumindest einem Mindest-Erstgasvolumenstrom entspricht und ein Zweitgasvolumenstrom des zweiten Gases höchstens einem Höchst-Zweitgasvolumenstroms entspricht. Diese Forderung kann dadurch erfüllt werden, dass ein erster Halsdurchmesser der ersten Düse und ein zweiter Halsdurchmesser der zweiten Düse geeignet gewählt werden. Je kleiner der Halsdurchmesser, also des lichten Durchmessers der Düse an ihrer radial engsten Stelle, desto geringer muss der Ausgangsdruck sein.

Selbstverständlich sind nicht für jede Kombination aus Mindest-Erstgasvolumenstrom und Höchst-Zweitgasvolumenstrom entsprechende Düsen herstellbar. In einem solchen Fall wird eine neue Kombination aus Mindest-Erstgasvolumenstrom und Höchst-Zweitgasvolumenstrom gewählt.

Das Verfahren wird vorzugsweise so betrieben, dass der Erstgasvolumenstrom stets oberhalb eines Mindest- Erstgasvolumenstroms liegt und/oder der Zweitgasvolumenstrom stets unterhalb des Höchst-Zweitgasvolumenstroms liegt.

Besonders günstig ist es, wenn die erste Düse und die zweite Düse so gewählt sind, dass ein, vorzugsweise möglichst geringer, Erstgasvolumenstrom existiert, für den gilt, dass dann, wenn der Zweitgasvolumenstrom kleiner ist als das 0,3-fache des Erstgasvolumenstroms (jeweils bezogen auf die gleichen thermodynamischen Bedingungen, z. B. die am Eingang der zweiten Düse), beide Düsen kritisch sind.

Vorzugsweise sind die Düsen so gewählt, dass der Höchst-Zweitgasvolumenstrom zumindest das 0,2-fache, insbesondere zumindest das 0,3-fache des Mindest-Erstgasvolumenstroms beträgt.

Vorzugsweise wird das Verfahren so durchgeführt, dass der Zweitgasvolumenstrom höchstens das 0,4-fache, insbesondere höchstens das 0,3-fache, des Mindest-Erstgasvolumenstroms beträgt.

Vorzugsweise werden im Rahmen eines erfindungsgemäßen Verfahrens der Erstgasvolumenstrom und/oder der Zweitgasvolumenstrom so geändert, dass sich nacheinander zumindest zwei unterschiedliche Mischungsverhältnisse einstellen. Auf diese Weise kann beispielsweise ein Prüfling anhand zweier unterschiedlicher Konzentrationen eines Prüfgases geprüft werden. Vorzugsweise liegt bei beiden Mischungsverhältnissen der Erstgasvolumenstrom oberhalb eines Mindest-Erstgasvolumenstroms und der Zweitgasvolumenstrom unterhalb des Höchst-Zweitgasvolumenstroms.

Unter einem Prüfling wird eine Vorrichtung verstanden, deren Eigenschaften, insbesondere deren Messunsicherheit geprüft wird. Statt von einem Prüfling könnte auch von einem Prüfstück oder einem Prüfkörper gesprochen werden.

Um ein Gasgemisch mit drei oder mehr Komponenten mit vorgebbaren Mischungsverhältnissen herzustellen, umfasst das Verfahren vorzugsweise die Schritte (a) Leiten des ersten Gasstroms, des zweiten Gasstroms und eines dritten Gasstroms eines dritten Gases aus einer dritten Gasquelle in eine dritte kritische Düse, die (i) bei einem dritten kritischen Drittdüseneingangsdruck kritisch wird und (ii) in Gasströmungsrichtung der dritten kritischen Düse angeordnet ist, mit einem Drittdüseneingangsdruck, der oberhalb des kritischen Drittdüseneingangsdrucks liegt, sodass sich ein zweiter Mischgasstrom ergibt, (b) Messen des Drittdüseneingangsdrucks, und (c) Bestimmen der Mischungsverhältnisse von zweitem Gas zu erstem Gas und drittem Gas zu erstem Gas im zweiten Mischgasstrom aus dem Erstdüseneingangsdruck, dem Zweitdüseneingangsdruck und dem Drittdüseneingangsdruck. Das Bestimmen des zweiten Mischungsverhältnisses von drittem Gas zu erstem Gas erfolgt vorzugsweise nur anhand des Erstdüseneingangsdrucks, des Zweitdüseneingangsdrucks und des Drittdüseneingangsdrucks.

Selbst verständlich ist es möglich, auch ein viertes Gas, ein fünftes Gas sowie mehrere weitere Gase mit jeweils entsprechenden kritisch betriebenen Düsen zuzuleiten. In diesem Fall wird sichergestellt, dass die durch die einzelnen Gase zugemischten Mengen einzeln anhand der jeweiligen Druckerhöhungen bestimmt werden können. Dazu wird vorzugsweise jedes Gas separat, beispielsweise mittels eines Ventils, insbesondere eines Nadelventil oder einer Kapillare, sowie einem Druckregler zugemischt.

Möglich ist zudem, die Gasgemisch-Herstellanlage zu kaskadieren. Dazu wird zunächst ein Mischgas hergestellt und durch das dritte Gas mittels der dritten Düse verdünnt.

Das erfindungsgemäße Verfahren kann vorzugsweise dafür eingesetzt werden, einen Prüfling zu kalibrieren. Dazu umfasst das Verfahren vorzugsweise die Schritte (a) Leiten des Mischgasstroms in eine Prüflingskammer und (b) Kalibrieren eines Prüflings in der Prüflingskammer mittels des Mischgasstroms.

Unter dem kalibrieren wird ein kalibrieren nach DIN 1319 verstanden. Insbesondere wird unter dem Merkmal, dass ein Prüfling kalibriert wird, wird insbesondere verstanden, dass eine Abweichung des Prüflings gegenüber einem anderen Prüfling, insbesondere einem normal, gemessen wird.

Gemäß einer bevorzugten Ausführungsform umfasst das Verfahren ein automatisches Regeln des Erstgas-Durchflusses und/oder des Zweitgas-Durchflusses, sodass sich ein vorgegebener Erstdüseneingangsdruck und ein vorgegebener Zweitdüseneingangsdruck einstellen.

Alternativ oder zusätzlich umfasst das Verfahren den Schritt eines automatischen Regelns des Erstgas-Durchflusses und/oder des Zweitgas-Durchflusses, sodass sich ein vorgegebenes Mischungsverhältnis einstellt.

Günstig ist es, wenn das Regeln so durchgeführt wird, dass sich das zumindest eine Mischungsverhältnis zeitabhängig ändert. Vorzugsweise werden zumindest zwei, insbesondere zumindest drei, bevorzugt eine Mehrzahl, an unterschiedlichen vorgegebenen Mischungsverhältnissen zeitlich nacheinander, insbesondere zu vorgegebenen Zeitpunkten, eingestellt.

Günstig ist es, wenn das Mischungsverhältnis zumindest 1:10 beträgt.

Im Rahmen eines Kalibrierverfahrens ist es günstig, wenn entweder das zweite Gas oder das erste Gas ein Zielgas ist und der Prüfling auf die Konzentration des Zielgases kalibriert wird. Das jeweils andere Gas ist dann vorzugsweise Luft, synthetische Luft oder ein Reingas, beispielsweise Stickstoff. Das Zielgas ist in der Regel eine Mischung aus zwei oder mehr Reinstoffen.

Vorzugsweise wird das Verfahren so durchgeführt, das eine erste Temperatur des ersten Gases beim Eintritt in die erste kritische Düse einer zweiten Temperatur des Gasgemisches aus erstem Gas und zweitem Gas beim Eintritt in die zweite Düse entspricht.

Im Folgenden wird die Erfindung anhand der beigefügten Zeichnung näher erläutert. Darin zeigt

Figur 1    ein schematisches Diagramm einer erfindungsgemäßen Gasgemisch-Herstellanlage zum Durchführen eines erfindungsgemäßen Verfahrens und

Figur 2    das Druckverhältnis zwischen den Eingangsdrücken der beiden kritischen Düsen, sofern kein Zweitgasstrom vorhanden ist und kritische Bedingungen vorhanden sind.

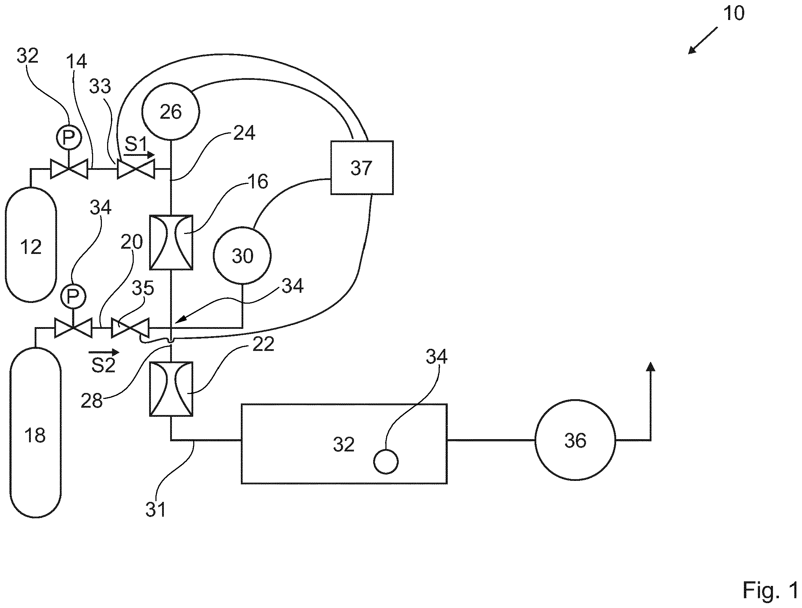

Figur 1 zeigt eine Gasgemisch-Herstellanlage 10, die eine erste Gasquelle 12 zum Abgeben eines ersten Gases 14, eine erste kritische Düse 16, eine zweite Gasquelle 18 zum Abgeben eines zweiten Gases 20 und eine zweite kritische Düse 22 aufweist. Die erste kritische Düse 16 wird oberhalb eines kritischen Erstdüseneingangsdruckverhältnisses $r_{p,krit,1}$ kritisch. Die zweite kritische Düse 22 wird oberhalb eines kritischen Zweitdüseneingangsdruckverhältnisses $r_{p,krit,2}$ kritisch.

Die erste Gasquelle 12 gibt das erste Gas 14 in eine erste Gasleitung 24 ab. Mittels eines ersten Druckmessers 26 wird ein Erstdüseneingangsdruck p1 in einer ersten Gasströmungsrichtung S1 vor der ersten kritischen Düse 16 gemessen. Das erste Gas 14 strömt hinter der ersten kritischen Düse 16 in eine zweite Gasleitung 28.

Die zweite Gasquelle 18 gibt das zweite Gas 20 in die zweite Gasleitung 28 ab. Mittels eines zweiten Druckmessers 30 wird ein Zweitdüseneingangsdruck p2 gemessen, mit der das Gasgemisch aus dem ersten Gas 14 und dem zweiten Gas 20, das einen Mischgasstrom 31 bildet, in die zweite Düse 22 eintritt.

Mittels eines ersten Ventils 33, das vorzugsweise regelbar ist, kann ein Erstgasvolumenstrom $Q_{D1}$ des ersten Gases 14 eingestellt werden. Mittels eines zweiten Ventils 35, bei dem es sich vorzugsweise um ein Nadelventil handelt, kann ein Zweitgasvolumenstrom $Q_{D2}$ des zweiten Gases 20 eingestellt werden. Das zweite Gas 20 strömt in der zweiten Gasleitung 28 in einer zweiten Gasströmungsrichtung S2.

Das hinter der zweiten Düse 22 abströmende Mischgas strömt in eine Prüflingskammer 32, in der ein schematisch eingezeichneter Prüfling 34 angeordnet ist. In Strömungsrichtung hinter der Prüflingskammer 32 kann ein Referenzsensor 36 angeordnet sein.

Im vorliegenden Fall handelt es sich beim zweiten Gas 20 um ein Gemisch aus 2 Gewichtsprozent Kohlendioxid in synthetischer Luft. Die erste Düse 16 hat beispielsweise einen Innendurchmesser von 200 $\mu$m. Die zweite Düse hat beispielsweise einen Innendurchmesser von 330 $\mu$m.

Der Durchfluss $Q_D$, der durch eine kritisch betriebene Düse 16, 22 erzeugt wird, ist in erster Näherung proportional zum Eingangsdruck

$$Q_D = p_{1,D}/p_0 * Q_{D,p0} \tag{1}$$

Voraussetzung ist, dass das kritische Druckverhältnis $r_{p,krit}$ eingehalten wird. In anderen Worten gilt dann:

$$p_{2,D}/p_{1,D} < r_{p,krit} \tag{2}$$

Darin ist $p_{2,D}$ der Ausgangsdruck und $p_{1,D}$ der Eingangsdruck.

Wird kein Gas am Verbindungspunkt eingespeist, hängt der Eingangsdruck am Eingang der zweiten Düse in erster Näherung vom Verhältnis der Quadrate der Halsdurchmesser ab.

Der Durchfluss durch eine Düse kann mit Hilfe von Düsenkennzahlen charakterisiert werden. In der PTB-Prüfregel Band 25 werden die Kennzahl $Q_{20,1000,tr}$ und der $c_{pe}$-Wert verwendet. Wird die Düse mit einem Eingangsdruck von p = 1000 mbar und einer Temperatur T der trockenen Luft von 20°C betrieben, ergibt sich der durch Kennzahl $Q_{20,1000,tr}$ angegebene Durchfluss. Für die Düsenreihenschaltung gilt:

$$Q_D = p_{1,D1} * Q_{20,1000,tr,D1} * k_{p,D1} = p_{1,D2} * Q_{20,1000,tr,D2} * k_{p,D2} \tag{3}$$

Die Druckabhängigkeit $k_p$ ist abhängig von der Reynoldszahl und kann im Zusammenhang mit dieser Anwendung vernachlässigt werden. Für das Verhältnis der Drücke gilt somit

$$p_{1,D1}/p_{1,D2} = r_{QD} \tag{4}$$

hier näherungsweise: $Q_{20,1000,tr,D2}/Q_{20,1000,tr,D1} = r_{QD}$

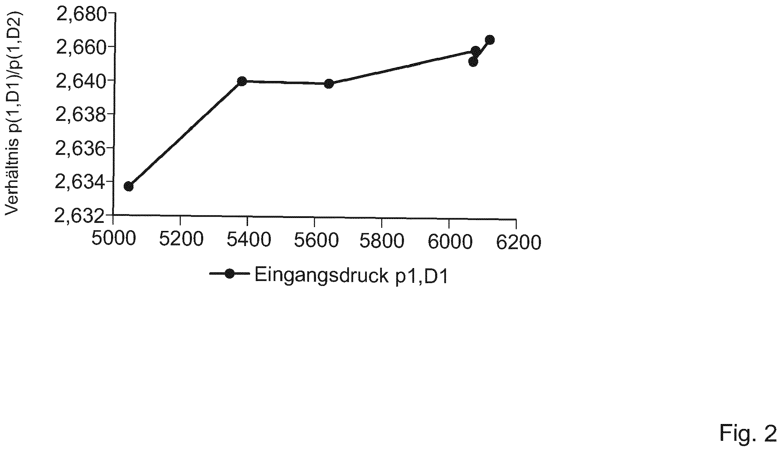

Für die Kalibriereinrichtung wurden als Düse 1 eine Düse mit $Q_{20,1000,tr,D1}$ = 22 l/h und als Düse 2 eine Düse mit $Q_{20,1000,tr,D2}$ =60 l/h als Nennwerte der Fertigungsvorgaben gewählt. Das gemessene Druckverhältnis $r_{QD}$ weicht vom Verhältnis der Nennwerte $r_{QD,nenn}$ = 2,73 auf Grund von Fertigungstoleranzen etwas ab. Das Verhältnis ist aus den oben genannten Gründen geringfügig druckabhängig, wie in Figur 2 dargestellt ist. Dieses Diagramm zeigt das Druckverhältnis $r_{QD}$ der Düsenreihenschaltung als Funktion des Eingangsdrucks $p_1$. Das Druckverhältnis zwischen den Eingangsdrücken der beiden kritischen Düsen, sofern kein Zweitgasstrom vorhanden ist und kritische Bedingungen vorhanden sind, kann auch für die Bestimmung des Eintretens der Kritikalität in Abhängigkeit vom Eingangsdruck $p_{1,D1}$ genutzt werden.

Anhand des Druckverhältnisses kann aus dem Druck an der ersten Düse 16 der zu erwartende Zweitdüseneingangsdruck an der zweiten Düse 22 berechnet werden, sofern keine Einspeisung am Verbindungspunkt erfolgt.

$$p_{1,D2,0} = p_{1,D1}/r_{QD} \tag{5}$$

Wird am Verbindungspunkt Gas über das Nadelventil eingespeist, erhöht sich der Druck auf den Wert $p_{1,D2,E}$.
Die Druckdifferenz zum Düseneingangsdruck ohne Einspeisung $p_{1,D2,0}$ ist ein Maß für die Einspeisemenge. Ist die Konzentration des zu verdünnenden Gases am Einspeisepunkt relativ gering, kann das eingespeiste Gas hinsichtlich seines Verhaltens als vergleichbar mit dem Trägergas angesehen werden. Damit ergib sich der eingespeiste Durchfluss zu:

$$Q_E = Q_{D2} - Q_{D2,0} \tag{6}$$

$$= p_{1,D2,E} * Q_{20,1000,tr,D2} - p_{1,D1} * r_{QD} * Q_{20,1000,tr,D2}$$

$$= (p_{1,D2,E} - p_{1,D1}/r_{QD}) * Q_{20,1000,tr,D2}$$

Im Falle eines Reingases als Einspeisegas gilt $x_{CO2}$ = 1, ansonsten der Stoffmengenanteil im Gasgemisch, in diesem Beispiel $x_{CO2}$ = 0,02. Die Menge des eingespeisten $CO_2$ ergibt sich aus der Stoffmengenanteil $CO_2$ des Einspeisegases $x_{CO2}$

$$Q_{E,CO2} = x_{CO2} * (p_{1,D2,E} - p_{1,D1}/r_{QD}) * Q_{20,1000,tr,D2} \tag{7}$$

Wird diese Menge auf den Gesamtdurchfluss bezogen, ergibt sich ein Mischungsverhältnis in Form des Stoffmengenanteils x des zweiten Gases 20 am Ausgang der Düsenreihenschaltung, also im Mischgasstrom 31 zu:

$$x_{CO2,D} = \frac{x_{CO2}(p_{1,D2,E} - p_{1,D1}/r_{QD})Q_{20,1000,tr,D2}}{p_{1,D2,E} \, Q_{20,1000,tr,D2}} \tag{8}$$

Der exakte Düsenbeiwert wird somit nicht benötigt, es ist nur auf geeignete Betriebsbedingungen zu achten, das heißt auf die Einhaltung des kritischen Druckverhältnisses bei beiden Düsen sowie gleiche Gastemperaturen an beiden Düsen.

$$x_{CO2,D} = \frac{x_{CO2}(p_{1,D2,E} - p_{1,D1}/r_{QD})}{p_{1,D2,E}} \tag{9}$$

Durch Anwenden von Formel(4) folgt

$$x_{CO2,D} = x_{CO2} \frac{p_{1,D2,E} - p_{1,D1}/\dfrac{p_{1,D1,0}}{p_{1,D2,0}}}{p_{1,D2,E}} \tag{10}$$

Es ist zu erkennen, dass in Formel (10) lediglich der Erstdüseneingangsdruck $p_1$ und der Zweitdüseneingangs-

druck $p_2$ erscheinen.

Erfindungsgemäß kann neben dem Stoffmengenanteil der Prüfgaskomponente im Gasgemisch auch eine entsprechende Konzentration, ein entsprechendes Volumenverhältnis oder ein entsprechendes Massenverhältnis dargestellt werden.

Ein wesentlicher Vorteil der Anordnung ist, dass an Stelle der Durchflussmessung eine Druckmessung tritt und dass die Konzentration beliebig eingestellt werden kann, solange die Düse 16 kritisch ist. Die Druckmessung kann mit relativ geringem Aufwand erfolgen, wodurch für die Messgröße eine geringe Messunsicherheit erreicht werden kann.

Die Gasgemisch-Herstelleranlage 10 besitzt eine Auswerteeinheit 37, die mit den Druckmessern 26, 30 und gegebenenfalls den Ventilen 33, 35 verbunden ist. Die Auswerteeinheit 37 ist ausgebildet zum automatischen Bestimmen des Mischungsverhältnisses x.

## Bezugszeichenliste

| | | | |
|---|---|---|---|
| 10 | Gasgemisch-Herstellanlage | $p_{2,D2,E}$ | Zweitdüseneingangsdruck bei Zweitgasvolumenstrom >0 |
| 12 | Gasquelle | | |
| 14 | erstes Gas | $Q_{T,p,g}$ | Durchfluss durch die Düse bei der Temperatur T, dem Ein-gangsdruck p und der Gaszu-sammensetzung g |
| 16 | erste kritische Düse | | |
| 18 | zweite Gasquelle | | |
| 20 | zweites Gas | | |
| 22 | zweite kritische Düse | $Q_D$ | Durchfluss |
| 24 | erste Gasleitung | $Q_{D1}$ | Erstgasvolumenstrom |
| 26 | erster Druckmesser | | |
| 28 | zweite Gasleitung | | |
| 30 | zweiter Druckmesser | $r_{p,krit}$ | kritisches Druckverhältnis einer Düse |
| 31 | Mischgasstrom | | |
| 32 | Prüflingskammer | $r_{Q,D}$ | Verhältnis der Düseneingangs-drücke (bei kritischem Betrieb ohne Zweitgasstrom) |
| 33 | erstes Ventil | | |
| 34 | Einspeisepunkt | | |
| 35 | zweites Ventil | S1 | erste Gasströmungsrichtung |
| 36 | Referenzsensor | S2 | zweite Gasströmungsrichtung |
| 37 | Auswerteeinheit | T | Temperatur |
| p | Druck | x | Mischungsverhältnis, Stoffmengenanteil |
| $p_1$ | Düseneingangsdruck | | |
| $p_2$ | Düsenausgangsdruck | | |
| $p_{1,D1}$ | Erstdüseneingangsdruck | | |
| $p_{2,D2}$ | Zweitdüseneingangsdruck | | |
| $p_{2,D2,0}$ | Zweitdüseneingangsdruck ohne Zweitgasstrom $= p_2'$ | | |
| $p_{1,D1}$ | Erstdüseneingangsdruck $= p_1'$ bei Bestimmung von $r_{Q,D}$ d.h. ohne Zweitgasstrom | | |

## Patentansprüche

1. Verfahren zum Herstellen eines Gasgemisches, mit den Schritten:

   (a) Leiten eines ersten Gasstroms eines ersten Gases (14) aus einer ersten Gasquelle (12) in eine erste kritische Düse (16),
   die bei einem ersten kritischen Erstdüseneingangsdruck ($r_{p,krit,1}$) kritisch wird, mit einem Erstdüseneingangs-druck ($p_1$), der oberhalb des kritischen Erstdüseneingangsdrucks ($r_{p,krit,1}$) liegt,
   (b) Leiten des ersten Gasstroms und eines zweiten Gasstroms eines zweiten Gases (22) aus einer zweiten Gasquelle (18) in eine zweite kritische Düse (22), die

(i) bei einem zweiten kritischen Zweitdüseneingangsdruck ($r_{p,krit,2}$) kritisch wird,
(ii) in einer ersten Gasströmungsrichtung (S1) des ersten Gases (14) hinter der ersten kritischen Düse (16) angeordnet ist und
(iii) in einer zweiten Gasströmungsrichtung (S2) des zweiten Gases (20) hinter der zweiten Gasquelle (18) angeordnet ist,

mit einem Zweitdüseneingangsdruck ($p_2$), der oberhalb des kritischen Zweitdüseneingangsdrucks ($r_{p,krit,2}$) liegt, sodass sich ein Mischgasstrom (31) ergibt,
(c) Messen des Erstdüseneingangsdrucks ($p_1$) und
(d) Messen des Zweitdüseneingangsdrucks ($p_2$),

**gekennzeichnet durch** den Schritt:
(e) Bestimmen eines Mischungsverhältnisses (x) von zweitem Gas (20) zu erstem Gas (14) im Mischgasstrom (31) aus dem Erstdüseneingangsdruck ($p_1$) und dem Zweitdüseneingangsdruck ($p_2$), wobei das Bestimmen des Mischungsverhältnisses (x) ohne Verwendung eines Durchflusswerts erfolgt.

2. Verfahren nach Anspruch 1, **dadurch gekennzeichnet, dass** das Bestimmen des Mischungsverhältnisses (x) ohne Verwendung eines Düsenparameters erfolgt.

3. Verfahren nach einem der vorstehenden Ansprüche, **dadurch gekennzeichnet, dass** das Bestimmen des Mischungsverhältnisses (x) anhand der Formel

$$x = \frac{p_2 - p_1 / \frac{p'_1}{p'_2}}{p_2}$$

erfolgt, in der

$p_1$ der Erstdüseneingangsdruck,
$p_2$ der Zweitdüseneingangsdruck,
$p'_1$ der Erstdüseneingangsdruck bei Zuleiten des ersten Gases und ohne Zuleiten des zweiten Gases und
$p'_2$ der Zweitdüseneingangsdruck bei Zuleiten des ersten Gases und ohne Zuleiten des zweiten Gases ist.

4. Verfahren nach einem der vorstehenden Ansprüche, **dadurch gekennzeichnet, dass**

(a) die erste Düse (16) und die zweite Düse (22) so gewählt sind, dass die erste Düse (16) und die zweite Düse (22) kritisch sind, wenn

- ein Erstgasvolumenstrom ($Q_{D1}$) des ersten Gases (14) oberhalb eines Mindest-Erstgasvolumenstroms liegt und
- ein Zweitgasvolumenstrom ($Q_{D2}$) des zweiten Gases (20) unterhalb eines Höchst-Zweitgasvolumenstroms liegt, und

(b) der Erstgasvolumenstrom ($Q_{D1}$) und/oder der Zweitgasvolumenstrom ($Q_{D2}$) so geändert werden, dass sich nacheinander zumindest zwei unterschiedliche Mischungsverhältnisse (x) einstellen,
(c) wobei bei beiden Mischungsverhältnisse (x) der Erstgasvolumenstrom ($Q_{D1}$) oberhalb eines Mindest-Erstgasvolumenstroms liegt und der Zweitgasvolumenstrom ($Q_{D2}$) unterhalb des Höchst-Zweitgasvolumenstroms liegt.

5. Verfahren nach einem der vorstehenden Ansprüche, mit den Schritten:

(a) Leiten des ersten Gasstroms, des zweiten Gasstroms und eines dritten Gasstroms eines dritten Gases aus einer dritten Gasquelle in eine dritte kritische Düse, die

(i) bei einem dritten kritischen Drittdüseneingangsdrucks kritisch wird und
(ii) in Gasströmungsrichtung hinter der zweiten kritischen Düse angeordnet ist,

mit einem Drittdüseneingangsdruck, der oberhalb des kritischen Drittdüseneingangsdrucks liegt, sodass sich ein zweiter Mischgasstrom ergibt,

(b) Messen des Drittdüseneingangsdrucks und

(c) Bestimmen der Mischungsverhältnisse von zweitem Gas zu erstem Gas und drittem Gas zu erstem Gas im zweiten Mischgasstrom aus dem Erstdüseneingangsdruck, dem Zweitdüseneingangsdruck und dem Drittdüseneingangsdruck,

(d) wobei das Bestimmen des zweiten Mischungsverhältnisses von drittem Gas zu erstem Gas nur anhand des Erstdüseneingangsdrucks, des Zweitdüseneingangsdrucks und des Drittdüseneingangsdrucks erfolgt.

6. Verfahren nach einem der vorstehenden Ansprüche, **dadurch gekennzeichnet, dass** das Mischungsverhältnis (x) zumindest 1:10 beträgt.

7. Verfahren nach einem der vorstehenden Ansprüche, **dadurch gekennzeichnet, dass** das zweite Gas ein Zielgas ist und dass der Prüfling auf die Konzentration des Zielgases kalibriert wird.

8. Gasgemisch-Herstellanlage (10) zum Herstellen eines Gasgemisches, mit

(a) einer ersten Gasquelle (12) zum Abgeben eines ersten Gases (14),
(b) einer ersten kritischen Düse (16), die

(i) bei einem ersten kritischen Erstdüseneingangsdruck ($r_{p,krit,1}$) kritisch wird und
(ii) mit der ersten Gasquelle (12) verbunden ist,

(c) einer zweiten Gasquelle (18) zum Abgeben eines zweiten Gases (20),
(d) einer zweiten kritischen Düse (22), die

(i) bei einem zweiten kritischen Zweitdüseneingangsdruck ($r_{p,krit,2}$) kritisch wird,
(ii) in einer ersten Gasströmungsrichtung (S1) des ersten Gases (14) hinter der ersten kritischen Düse (16) angeordnet ist und
(iii) in einer zweiten Gasströmungsrichtung (S2) des zweiten Gases (20) hinter der zweiten Gasquelle (18) angeordnet ist,

(e) einem ersten Druckmesser (26), der zum Messen eines Erstdüseneingangsdrucks ($p_1$) an einem ersten Eingang der ersten kritischen Düse (16) angeordnet ist,
(f) einem zweiten Druckmesser (30), der zum Messen eines Zweitdüseneingangsdrucks ($p_2$) an einem zweiten Eingang der zweiten kritischen Düse (22) angeordnet ist, und
(g) einer Auswerteeinheit (37),
**dadurch gekennzeichnet, dass**
(h) die Auswerteeinheit (37) ausgebildet ist zum automatischen Bestimmen eines Mischungsverhältnisses (x) von erstem Gas (14) zu zweitem Gas (20), das ohne Verwendung eines Durchflusswerts erfolgt.

9. Gasgemisch-Herstellanlage nach Anspruch 8, **gekennzeichnet durch**

(a) ein erstes Ventil (33) zum Einstellen eines Erstgas-Durchflusses an erstem Gas (14) und/oder
(b) ein zweites Ventil (35) zum Einstellen eines Zweitgas-Durchflusses an zweitem Gas (20).

10. Gasgemisch-Herstellanlage nach einem der vorstehenden Ansprüche 8 oder 9, **gekennzeichnet durch** eine Regelung, die ausgebildet ist zum automatischen Regeln des Erstgas-Durchflusses und/oder des Zweitgas-Durchflusses, sodass sich

(a) ein vorgegebener Erstdüseneingangsdruck ($p_1$) und/oder ein vorgegebener Zweitdüseneingangsdruck ($p_2$) einstellen und/oder
(b) ein vorgegebenes Mischungsverhältnis (x) einstellt.

**Claims**

1. A method for producing a gas mixture, comprising the steps:

(a) guiding a first gas flow of a first gas (14) out of a first gas source (12) into a first critical nozzle (16),

which becomes critical at a first critical first nozzle input pressure ($r_{p,krit,1}$), with a first nozzle input pressure ($p_1$) that lies above the critical first nozzle input pressure ($r_{p,krit,1}$),
(b) guiding the first gas flow and a second gas flow of a second gas (22) out of a second gas source (18) into a second critical nozzle (22), which

 (i) becomes critical at a second critical second nozzle input pressure (rp,krit,2),
 (ii) is arranged downstream of the first critical nozzle (16) in a first gas flow direction (S1) of the first gas (14) and
 (iii) is arranged downstream of the second gas source (18) in a second gas flow direction (S2) of the second gas (20),

at a second nozzle input pressure ($p_2$) that lies above the critical second nozzle input pressure ($r_{p,krit,2}$), resulting in a mixed gas flow (31),
(c) measuring the first nozzle input pressure ($p_1$) and
(d) measuring the second nozzle input pressure ($p_2$),
**characterised by** the step:
(e) determining a mixing ratio (x) of the second gas (20) to the first gas (14) in the mixed gas flow (31) using only the first nozzle input pressure ($p_1$) and the second nozzle input pressure ($p_2$), wherein determining the mixing ratio (x) is performed without using a flow value.

2. The method according to claim 1, **characterised in that**
determining the mixing ratio (x) is performed without using a nozzle parameter.

3. The method according to one of the preceding claims, **characterised in that** the determination of the mixing ratio (x) is achieved using the formula

$$x = \frac{p_2 - p_1 / \frac{p\prime_1}{p\prime_2}}{p_2}$$

in which

 $p_1$ is the first nozzle input pressure,
 $p_2$ the second nozzle input pressure,
 $p\prime_1$ the first nozzle input pressure when supplying the first gas and without supplying the second gas and
 $p\prime_2$ the second nozzle input pressure when supplying the first gas and without supplying the second gas.

4. The method according to one of the preceding claims, **characterised in that**

 (a) the first nozzle (16) and the second nozzle (22) are selected in such a way that the first nozzle (16) and the second nozzle (22) are critical when

  - a first gas volume flow ($Q_{D1}$) of the first gas (14) is above a minimum first gas volume flow and
  - a second gas volume flow ($Q_{D2}$) of the second gas (20) is below a maximum second gas volume flow, and

 (b) the first gas volume flow ($Q_{D1}$) and/or the second gas volume flow ($Q_{D2}$) are altered in such a way that at least two different mixing ratios (x) are set one after the other,
 (c) wherein the two mixing ratios (x) of the first gas volume flow ($Q_{D1}$) lies above a minimum first gas volume flow and the second gas volume flow ($Q_{D2}$) lies below the maximum second gas volume flow.

5. The method according to one of the preceding claims, comprising the steps:

 (a) guiding the first gas flow, the second gas flow and a third gas flow of a third gas from a third gas source into a third critical nozzle which

  (i) becomes critical at a third critical third nozzle input pressure and
  (ii) is arranged downstream of the second critical nozzle in the direction of gas flow,

at a third nozzle input pressure that lies above the critical third nozzle input pressure, resulting in a second mixed gas flow,
(b) measuring the third nozzle input pressure and
(c) determining the mixing ratios of the second gas to the first gas and the third gas to the first gas in the second mixed gas flow from the first nozzle input pressure, the second nozzle input pressure and the third nozzle input pressure,
(d) wherein the determination of the second mixing ratio of the third gas to the first gas is achieved using only the first nozzle input pressure, the second nozzle input pressure and the third nozzle input pressure.

6. The method according to one of the preceding claims, **characterised in that** the mixing ratio (x) is at least 1:10.

7. The method according to one of the preceding claims, **characterised in that** the second gas is a target gas and that the sample is calibrated to the concentration of the target gas.

8. A gas mixture production system (10) for producing a gas mix with

(a) a first gas source (12) for emitting a first gas (14),
(b) a first critical nozzle (16), which

(i) becomes critical at a first critical first nozzle input pressure ($r_{p,krit,2}$) and
(ii) is connected to the first gas source (12),

(c) with a second gas source (18) for emitting a second gas (20),
(d) a second critical nozzle (22), which

(i) becomes critical at a second critical second nozzle input pressure ($r_{p,krit,2}$),
(ii) is arranged downstream of the first critical nozzle (16) in a first gas flow direction (S1) of the first gas (14) and
(iii) is arranged downstream of the second gas source (18) in a second gas flow direction (S2) of the second gas (20),

(e) a first pressure gauge (26), which is arranged at a first entry of the first critical nozzle (16) to measure a first nozzle input pressure ($p_1$),
(f) a second pressure gauge (30), which is arranged at a second entry of the second critical nozzle (22) to measure a second nozzle input pressure ($p_2$), and
(g) an evaluation unit (37),
**characterised in that**
(h) the evaluation unit (37) is designed to automatically determine a mixing ratio (x) of the first gas (14) to the second gas (20), which is achieved without using a flow value.

9. The gas mixture production system according to claim 8, **characterised by**

(a) a first valve (33) for setting a first gas flow of the first gas (14) and/or
(b) a second valve (35) for setting a second gas flow of the second gas (20).

10. The gas mixture production system according to one of the preceding claims 8 or 9, **characterised by** a control that is designed to automatically regulate the first gas flow and/or the second gas flow, so that

(a) a predetermined first nozzle inlet pressure ($p_1$) and/or a predetermined second nozzle inlet pressure ($p_2$) are set and/or
(b) a predetermined mixing ratio (x) is set.

**Revendications**

1. Procédé de production d'un mélange de gaz, comprenant les étapes suivantes consistant à :

(a) diriger un premier flux gazeux d'un premier gaz (14) provenant d'une première source de gaz (12) jusque dans une première buse critique (16) qui devient critique à une première pression d'entrée critique ($r_{p,krit,1}$) de la première buse, avec une pression d'entrée ($p_1$) de la première buse qui est supérieure à la pression d'entrée critique ($r_{p,krit,1}$) de la première buse,

(b) diriger le premier flux gazeux et un deuxième flux gazeux d'un deuxième gaz (22) provenant d'une deuxième source de gaz (18) jusque dans une deuxième buse critique (22) qui

(i) devient critique à une deuxième pression d'entrée critique ($r_{p,krit,2}$) de la deuxième buse,

(ii) est agencée en aval de la première buse critique (16) dans une première direction d'écoulement de gaz (S1) du premier gaz (14), et

(iii) est agencée en aval de la deuxième source de gaz (18) dans une deuxième direction d'écoulement de gaz (S2) du deuxième gaz (20),

(iv) avec une pression d'entrée ($p_2$) de la deuxième buse qui est supérieure à la pression d'entrée critique ($r_{p,krit,2}$) de la deuxième buse, de sorte qu'il en résulte un flux gazeux mélangé (31),

(c) mesurer la pression d'entrée ($p_1$) de la première buse, et

(d) mesurer la pression d'entrée ($p_2$) de la deuxième buse,

**caractérisé par** l'étape consistant à :

(e) déterminer un rapport de mélange (x) du deuxième gaz (20) sur le premier gaz (14) dans le flux gazeux mélangé (31) en se basant sur la pression d'entrée ($p_1$) de la première buse et sur la pression d'entrée ($p_2$) de la deuxième buse, la détermination du rapport de mélange (x) étant effectuée sans utiliser une valeur de débit.

2. Procédé selon la revendication 1, **caractérisé en ce que**
la détermination du rapport de mélange (x) est effectuée sans utiliser un paramètre de la buse.

3. Procédé selon l'une des revendications précédentes, **caractérisé en ce que** la détermination du rapport de mélange (x) est effectuée à l'aide de la formule

$$x = \frac{p_2 - p_1 / \frac{p'_1}{p'_2}}{p_2}$$

où

$p_1$ est la pression d'entrée de la première buse,

$p_2$ est la pression d'entrée de la deuxième buse,

$p'_1$ est la pression d'entrée de la première buse avec apport du premier gaz et sans apport du deuxième gaz, et

$p'_2$ est la pression d'entrée de la deuxième buse avec apport du premier gaz et sans apport du deuxième gaz.

4. Procédé selon l'une des revendications précédentes, **caractérisé en ce que**

(a) la première buse (16) et la deuxième buse (22) sont choisies de telle sorte que la première buse (16) et la deuxième buse (22) sont critiques si

- un flux volumique ($QD_1$) du premier gaz (14) est supérieur à un flux volumique minimum du premier gaz, et
- un flux volumique ($QD_2$) du deuxième gaz (20) est inférieur à un flux volumique maximum du deuxième gaz, et

(b) le flux volumique ($QD_1$) du premier gaz et/ou le flux volumique ($QD_2$) du deuxième gaz sont modifiés de telle sorte qu'au moins deux rapports de mélange (x) différents s'établissent successivement,

(c) pour les deux rapports de mélange (x), le flux volumique ($QD_1$) du premier gaz est supérieur à un flux volumique minimum du premier gaz, et le flux volumique ($QD_2$) du deuxième gaz est inférieur au flux volumique maximum du deuxième gaz.

5. Procédé selon l'une des revendications précédentes, comprenant les étapes consistant à :

(a) diriger le premier flux gazeux, le deuxième flux gazeux et un troisième flux gazeux d'un troisième gaz, provenant d'une troisième source de gaz, jusque dans une troisième buse critique qui

(i) devient critique à une troisième pression d'entrée critique de la troisième buse et
(ii) est agencée en aval de la deuxième buse critique dans une direction d'écoulement de gaz,

avec une pression d'entrée de la troisième buse supérieure à la pression d'entrée critique de la troisième buse, de sorte qu'il en résulte un deuxième flux gazeux mélangé,
(b) mesurer la pression d'entrée de la troisième buse, et
(c) déterminer les rapports de mélange du deuxième gaz sur le premier gaz et du troisième gaz sur le premier gaz dans le deuxième flux gazeux mélangé en se basant sur la pression d'entrée de la première buse, sur la pression d'entrée de la deuxième buse et sur la pression d'entrée de la troisième buse,
(d) la détermination du deuxième rapport de mélange du troisième gaz sur le premier gaz étant effectuée uniquement en se basant sur la pression d'entrée de la première buse, sur la pression d'entrée de la deuxième buse et sur e la pression d'entrée de la troisième buse.

6. Procédé selon l'une des revendications précédentes, **caractérisé en ce que** le rapport de mélange (x) est d'au moins 1:10.

7. Procédé selon l'une des revendications précédentes, **caractérisé en ce que** le deuxième gaz est un gaz cible, et **en ce que** l'échantillon est étalonné par rapport à la concentration du gaz cible.

8. Installation de production d'un mélange de gaz (10) pour la production d'un mélange de gaz, comprenant

(a) une première source de gaz (12) pour délivrer un premier gaz (14),
(b) une première buse critique (16) qui

(i) devient critique à une première pression d'entrée critique ($r_{p,krit,1}$) de la première de buse et
(ii) est reliée à la première source de gaz (12),

(c) une deuxième source de gaz (18) pour délivrer un deuxième gaz (20),
(d) une deuxième buse critique (22) qui

(i) devient critique à une deuxième pression d'entrée critique ($r_{p,krit,2}$) de la deuxième buse,
(ii) est agencée en aval de la première buse critique (16) dans une première direction d'écoulement de gaz (S1) du premier gaz (14) et
(iii) est agencée en aval de la deuxième source de gaz (18) dans une deuxième direction d'écoulement de gaz (S2) du deuxième gaz (20),

(e) un premier manomètre (26) agencé pour mesurer une pression d'entrée ($p_1$) de la première buse à une première entrée de la première buse critique (16),
(f) un deuxième manomètre (30) agencé pour mesurer une pression d'entrée ($p_2$) de la deuxième buse à une deuxième entrée de la deuxième buse critique (22), et
(g) une unité d'évaluation (37),
**caractérisée en ce que**
(h) l'unité d'évaluation (37) est conçue pour déterminer automatiquement un rapport de mélange (x) du premier gaz (14) sur le deuxième gaz (20) sans utiliser une valeur de débit.

9. Installation de production de mélange de gaz selon la revendication 8, **caractérisée par**

(a) une première vanne (33) pour régler un débit du premier de gaz (14),et/ou
(b) une deuxième vanne (35) pour régler un débit du deuxième gaz (20).

10. Installation de production de mélange de gaz selon l'une des revendications précédentes 8 ou 9, **caractérisée par** une régulation conçue pour réguler automatiquement le débit du premier gaz et/ou le débit du deuxième gaz, de manière à établir

(a) une pression d'entrée ($p_1$) prédéfinie de la première buse et/ou une pression d'entrée ($p_2$) prédéfinie de la

deuxième buse, et/ou
(b) un rapport de mélange prédéfini (x).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2021394140 A1
- US 4706492 A
- US 8418732 B
- DE 102008031005 B3